# EUROPÄISCHE PATENTSCHRIFT

(11) **EP 2 405 736 B1**
(45) Veröffentlichungstag und Bekanntmachung des Hinweises auf die Patenterteilung: **05.06.2013**
(21) Anmeldenummer: 10700990.4
(22) Anmeldetag: 15.01.2010
(51) Int. Cl.: A01F 15/18, B65G 15/34, B32B 5/26, B32B 25/10, B32B 27/02, B32B 27/34, B32B 27/36

(54) **Endloses Rundballenpressband und Verfahren zur Herstellung**
Continuous round baler press belt and method for the production thereof
Courroie pour presse de ballots ronds et procédé de fabrication

(30) Priorität: 09.03.2009 DE 102009003588
(43) Veröffentlichungstag der Anmeldung: 18.01.2012
(73) Patentinhaber: ContiTech Transportbandsysteme GmbH, 30165 Hannover (DE)
(72) Erfinder: BEHRENS, Carsten, 37434 Bilshausen (DE)
(74) Vertreter: Finger, Karsten
(86) Internationale Anmeldenummer: PCT/EP2010/050431
(87) Internationale Veröffentlichungsnummer: WO 2010/102847

(56) Entgegenhaltungen:
- EP-A2- 0 331 872
- DE-A1- 3 107 744
- DE-A1- 3 234 455
- DE-C1- 10 243 727
- US-A1- 2008 105 517

## Beschreibung

Die Erfindung betrifft ein endloses Rundballenpressband gemäß dem Oberbegriff des Patentanspruch 1.

Aus der DE 102 43 727 C1 ist ein Rundballenpressband bekannt, dessen zwischen den Gummideckplatten eingebettetes Verstärkungsgewebe aus einer einzigen gummierten Gewebebahn gewickelt ist. Durch die Wicklung bildet die Gewebebahn je nach Anzahl der Wicklungen zwei oder mehr umfangsmäßig übereinander liegende Gewebelagen. Die gummierte Gewebebahn geringer Dicke wird über die Umfangslänge des vorgesehenen Rundballenpressbandes solange gewickelt, bis die vorgesehene Lagenanzahl der Gewebeverstärkung des Ballenpressbandes erreicht ist, so dass sofort ein endloses Gewebeband entsteht. Das kann zwei oder mehrere Gewebelagen enthalten.

Die beiden Enden der gewickelten Gewebebahn werden schräg zur Bahnlängsrichtung geschnitten und mit ihren Enden ohne gegenseitige Überlappung mit dem Gewebewickel auf je einer Außenseite des Wickels haftschlüssig verbunden. Auf die abgeschnittenen, angehafteten Enden werden Abdeckstreifen aufgelegt. Das Auflegen des inneren Abdeckstreifens kann per Hand geschehen. Die Abdeckstreifen haben vorzugsweise die gleiche Schräge wie die abgeschnittenen Bahnenden.

Die Abdeckstreifen, welche zum einen auf den Bahnenden und zum anderen auf dem Gewebewickel angebracht sind, bestehen aus gitterförmigem Gewebe, z. B. gitterförmigem Polyamid-Gewebe. Die offene Gitterstruktur des Abdeckgewebes ermöglicht ein Verbinden der Bindegummischicht der Gewebebahn mit den äußeren aufgelegten Gummideckplatten.

Nach dem folgenden Auflegen der unteren und der oberen Gummideckplatte auf den endlosen Gewebewickel, dem Gewebekern, wird der so entstandene bzw. konfektionierte endlose Bandrohling vulkanisiert. Dabei verbinden sich die Gummideckplatten mit dem gewickelten Gewebekern, der auch oft mit dem Begriff Karkasse bezeichnet wird. Damit ist ein endlos gewickeltes Rundballenpressband entstanden, das sich vorteilhaft im Einsatz bewährt hat.

Allerdings weist das Rundballenpressband einen durch die Bahnenden definierten Verbindungsbereich auf, der aufgrund der im Betrieb derartiger Rundballenpressbänder entstehenden Biegewechsel reduzierende Auswirkungen auf die Standfestigkeit hat. Die Karkasse ist im Verbindungsbereich aus der horizontalen Belastungsebene ausgelenkt und wird somit zusätzlichen Knickbelastungen als auch Zusatzdehnungen im Bereich der Gewebebahnenden unterzogen.

In dem Bereich der Gewebebahnenden stellt sich im Verbindungsbereich ein Kerb dar. Selbiger Kerb bewirkt unter dynamischer Belastung Spannungsspitzen, denen das Bindegummi widerstehen muss. Dieses hat zur Folge, dass die Materialanforderungen an das Bindegummi hauptsächlich durch die Verbindungsgestaltung herrühren und bei einer belastungsärmeren Verbindungsgestaltung erhebliche Einsparungsmöglichkeiten im Bereich Materialqualität als auch Heiz- und Durchlaufzeiten zu erzielen wären.

Bei einer geringeren Wicklungszahl von zwei oder drei Wicklungen bzw. Lagen kommt es zu erheblichen Dickensprüngen im Verbindungsbereich bezogen auf die eigentliche Kerndicke. Auch dieses führt zu einer Erhöhung der Kerbempfindlichkeit. Die dynamische Dauerfestigkeit der Verbindung ist für manche Anwendungsfälle nicht ausreichend.

Aus der DE 698 30 206 T2 (EP 1 175 358 B1) ist ein Transportband mit einem aus drei Gewebelagen bestehenden Verstärkungskern (Karkasse) bekannt. Zwischen drei aufeinander liegenden Gewebelagen sind Bindcgummischichten angeordnet. Die beiden äußeren Gewebelagen werden von äußeren Gummideckplatten abgedeckt. Es wird ein Bandmaterial hergestellt, aus dem wiederum nach Ablängen des ausvulkanisierten Bandmaterials in einem besonderen Arbeitsschritt und mit einer besonderen Methode die Endlosschließung zur Erzielung eines endlosen Transportbandes vorgenommen werden muss. Dabei werden überwiegend die Bahnenden mit einer Hakenverbindung zusammengebunden.

Dokument EP 0 331 872 A2 offenbart der Oberbegriff des Anspruchs 1.

Der Erfindung liegt die Aufgabe zugrunde, ein endloses Rundballenpressband der eingangs geschilderten Art zu schaffen, das sich durch eine höhere Standfestigkeit und eine längere Lebensdauer auszeichnet und kostengünstiger herstellbar ist.

Die Aufgabe wird erfindungsgemäß dadurch gelöst, dass die Karkasse aus mindestens zwei einzelnen, übereinander liegenden Gewebebahnlagen besteht, wobei die beiden Enden jeder Gewebebahnlage auf Stoß, sich nicht gegenseitig überlappend liegen und wobei die Stoßstellen der einzelnen Gewebebahnlagen über den Umfang des endlosen Bandaufbaus verteilt angeordnet sind.

Durch die Erfindung wird ein Rundballenpressband geschaffen, dessen Verstärkungsgewebe (Karkasse) nicht gewickelt ist, sondern aus auf den vorbestimmten Umfang des Endlosbandes abgeschnittenen, einzelnen Gewebebahnlagen besteht, deren Enden ohne gegenseitige Überlappung auf Stoß bzw. unter einem geringen Abstand stirnseitig gegenüberliegend angeordnet sind. Die Stoßstellen der einzelnen Gewebebahnlagen sind dabei über den Umfang des Bandaufbaus verteilt angeordnet, so dass die eine geringe Schwächung des Endlosbandes darstellenden Gewebestöße sich nicht auf eine einzige Verbindungsstelle im Endlosband konzentrieren.

In vorteilhafter Ausgestaltung der Erfindung bestehen die Gewebebahnlagen der Karkasse aus unterschiedlichen Gewebearten. Diese Kombination verschiedener Gewebarten ermöglicht es, eine Karkasse mit unterschiedlichen Zugträgereigenschaften über den Querschnitt zu fertigen. Beispielsweise können im Außenbereich hoch elastische Gewebearten verwendet werden, denen sich dehnungsarme Gewebelagen im Bereich der neutralen Phase anschließen.

In weiterer vorteilhafter Ausgestaltung der Erfindung bestehen die Gewebebahnlagen aus Gewebearten mit unterschiedlichen mechanischen Eigenschaften.

Eine vorteilhafte Ausgestaltung der Erfindung wird im Anspruch 5 gekennzeichnet. Die gleichmäßige Verteilung dreier Stoßstellen über den Umfang des endlosen Riemenbandes führt zu einer geringen Biegewechselbelastung und einer damit verbundenen geringeren Walkwärme über die gesamte Bandlänge.

In weiterer vorteilhafter Ausgestaltung der Erfindung werden die Stoßstellen der äußeren und inneren Gewebebahnlage in Richtung der jeweiligen benachbarten Gummideckplatte von gitterförmigem Abdeckgewebe haftschlüssig abgedeckt.

Die Erfindung betrifft ferner ein Verfahren zur Herstellung eines Rundballenpressbandes nach einem der Ansprüche 1 bis 6, gekennzeichnet durch folgende Verfahrensschritte:
- auf die Umfangslänge des zu erstellenden endlosen Rundballenpressbandes abgestimmtes Ablängen von mindestens zwei Gewebebahnlagen,
- Aufeinanderlegen der Gewebebahnlagen unter umfangsmäßiger Versetzung der Stoßstellen zueinander,
- Aufbringen einer inneren und einer äußeren Gummideckplatte,
- Vulkanisieren des aufgebauten Bandrohlings.

Weiter ist es möglich, auf die frei liegenden Stoßstellen der Karkasse Abdeckstreifen aus Gittergewebe aufzubringen, bevor die inneren und äußeren Gummideckplatten aufgebracht und der gesamte endlose Bandrohling ausvulkanisiert wird.

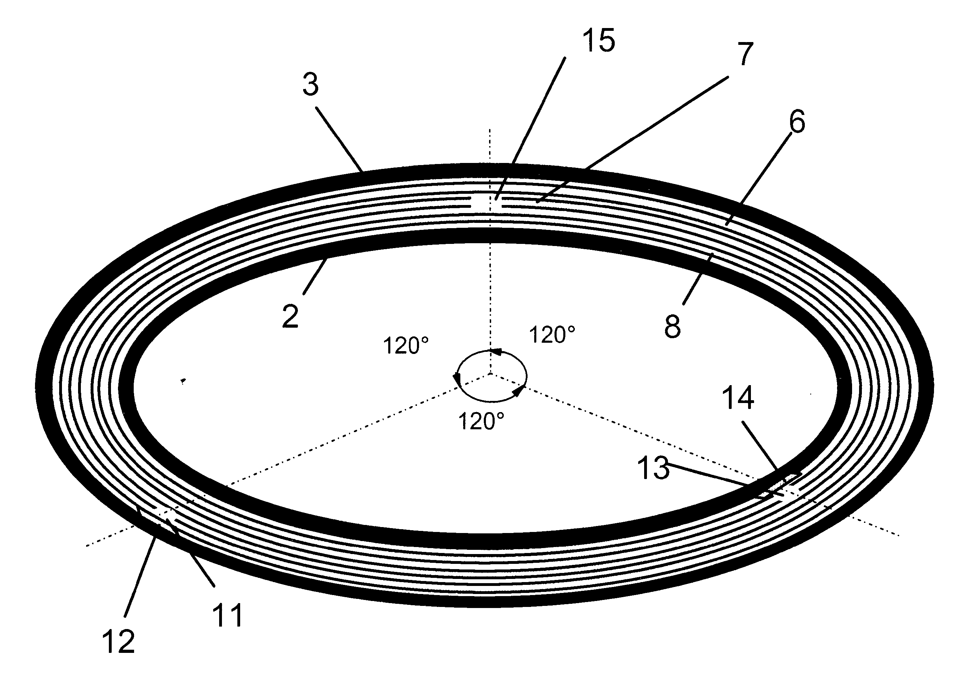

Anhand der Zeichnung wird ein Ausführungsbeispiel der Erfindung näher erläutert.

Das in der Figur dargestellte endlose Rundballenpressband weist eine innere Gummideckplatte 2 und eine äußere Gummideckplatte 3 auf. Zwischen diesen beiden Gummideckplatten 2 und 3 ist ein Gewebeverstärkungsaufbau, eine sogenannte Karkasse, angeordnet, die aus drei einzelnen, übereinander angeordneten Gewebebahnlagen 6, 7 und 8 besteht. Diese Gewebebahnlagen 6, 7 und 8 sind gummiert, d. h., das jeweilige Gewebe ist in einem Streichprozess oder einem Kalandricrprozess mit Bindegummi geskimt worden.

Die Enden jeder Gewebebahnlage 6, 7 und 8 liegen über den Umfang des Rundballenpressbandes gesehen gleichmäßig unter einem Winkel von jeweils 120° verteilt angeordnet. Dabei liegen die Enden jeder Gewebebahnlage 6, 7 bzw. 8 auf Stoß, d. h., stirnseitig gegenüber und überlappen sich nicht. Zwischen den Enden ist jeweils Bindegummi vorhanden.

Die Stoßstelle 11 der äußeren Gewebebahnlage 6 ist zur äußeren Deckplatte 3 hin mit einem Abdeckstreifen 12 aus Gittergewebe abgedeckt. Die Stoßstelle 13 der innen liegenden Gewebebahn 8 ist zur inneren Gummideckplatte 2 hin ebenfalls von einem Abdeckstreifen 14 aus Gittergewebe abgedeckt.

Die Stoßstelle 15 der mittleren Gewebebahnlage 7 weist kein Abdeckgewebe auf, da die obere und untere Gewebebahnlage 6 bzw. 8 die Stoßstelle 15 der mittleren Gewebebahnlage 7 abdecken.

Die mittlere Gewebebahnlage 7 besteht aus einem EP-Gewebe. Dieses EP-Gewebe weist die beiden Materialien Polyester und Polyamid auf, wobei Polyester als Kettfaden und Polyamid als Schussfaden im Gewebe angeordnet sind. Innere und äußere Gewebebahnlagen 6 bzw. 8 bestehen aus einem PE-Gewebe (Polyamid/Polyester). Die unterschiedlich gewählten Gewebetypen ermöglichen es dem Bandhersteller die mechanischen Eigenschaften des Endlosbandes günstig zu beeinflussen. Das mittlere EP-Gewebe 7 hat eine dehnungsarme Eigenschaft, was sich in der neutralen Faser des Endlosbandes als positiv darstellt. Die dehnungsreicheren PE-Gewebe 6 und 8 ermöglichen eine Verringerung des zulässigen Biegeradius im Betrieb und erlauben den Einsatz kleinerer Trommeldurchmesser, während das mittlere EP-Gewebe die Durchschlagfestigkeit erhöht.

### Bezugszeichenliste

### (Teil der Beschreibung)

- 2: innere Gummideckplatte
- 3: äußere Gummideckplatte
- 6: äußere Gewebebahnlage
- 7: mittlere Gewebebahnlage
- 8: innere Gewebebahnlage
- 11: Stoßstelle
- 12: Abdeckstreifen
- 13: Stoßstelle
- 14: Abdeckstreifen
- 15: Stoßstelle

## Patentansprüche

1. Endloses Rundballenpressband aus Gummi oder gummiähnlichen Stoffen mit einem eingebetteten Kern aus Verstärkungsgewebe, der mindestens zwei übereinanderliegende Gewebelagen aufweist, wobei
der Kern (Karkasse) aus mindestens zwei einzelnen, übereinanderliegenden Gewebebahnlagen (6. 7, 8) besteht, **dadurch gekennzeichnet, dass**
die beiden Enden jeder Gewebebahnlage auf Stoß, sich nicht gegenseitig überlappend liegen
und wobei die Stoßstellen (11, 13, 15) der einzelnen Gewebebahnlagen (6, 7 bzw. 8) über den Umfang des Pressbandes verteilt angeordnet sind.

2. Endloses Rundballenpressband nach Anspruch 1, **dadurch gekennzeichnet, dass** die Gewebebahnlagen (6, 7, 8) aus unterschiedlichen Gewebearten bestehen.

3. Endloses Rundballenpressband nach Anspruch 1, **dadurch gekennzeichnet, dass** die Gewebebahnlagen (6, 7, 8) aus Gewebearten mit unterschiedlichen mechanischen Eigenschaften bestehen.

4. Endloses Rundballenpressband nach Anspruch 1, **dadurch gekennzeichnet, dass** die Gewebebahnlagen (6, 7, 8) aus unterschiedlichen Gewebewerkstoffen bestehen.

5. Endloses Rundballenpressband nach Anspruch 1, **dadurch gekennzeichnet, dass** die Karkasse aus drei Gewebebahnlagen (6, 7, 8) aufgebaut ist, deren Stoßstellen (11, 13, 15) zueinander um 120° über den Umfang des endlosen Rundballenpressbandes verteilt angeordnet sind.

6. Endloses Rundballenpressband nach einem der Ansprüche 1 bis 5, **dadurch gekennzeichnet, dass** die Stoßstellen (11, 13) der jeweils inneren und äußeren (6 bzw. 8) Gewebebahnlage in Richtung der jeweiligen Gummideckplatte (2 bzw. 3) durch einen Abdeckstreifen (12, 14) aus offenem Gittergewebe abgedeckt sind.

7. Verfahren zum Herstellen eines endlosen Rundballenpressbandes nach den vorhergehenden Ansprüchen, **gekennzeichnet durch** folgende Verfahrensschritte:
- auf die Umfangslänge des zu erstellenden endlosen Rundballenpressbandes abgestimmtes Ablängen von mindestens zwei Gewebebahnlagen,
- Aufeinanderlegen der Gewebebahnlagen unter umfangsmäßiger Versetzung der Stoßstellen (11, 13, 15) zueinander,
- Aufbringen einer inneren und einer äußeren Gummideckplatte (2, 3),
- Vulkanisieren des aufgebauten endlosen Bandrohlings.

## Claims

1. Continuous round baler press belt composed of rubber or rubber-like materials with an embedded core which is composed of reinforcing fabric and has at least two fabric layers lying one on top of the other, wherein
the core (carcass) is composed of at least two individual fabric web layers (6, 7, 8) lying one on top of the other, **characterized in that**
the two ends of each fabric web layer abut one another and do not overlap one another,
and wherein the abutment points (11, 13, 15) of the individual fabric web layers (6, 7 and 8) are arranged distributed over the circumference of the press belt.

2. Continuous round baler press belt according to Claim 1, **characterized in that** the fabric web layers (6, 7, 8) are composed of different types of fabric.

3. Continuous round baler press belt according to Claim 1, **characterized in that** the fabric web layers (6, 7, 8) are composed of types of fabric with different mechanical properties.

4. Continuous round baler press belt according to Claim 1, **characterized in that** the fabric web layers (6, 7, 8) are composed of different fabric materials.

5. Continuous round baler press belt according to Claim 1, **characterized in that** the carcass is composed of three fabric web layers (6, 7, 8) whose abutment points (11, 13, 15) are arranged distributed at 120° with respect to one another over the circumference of the continuous round baler press belt.

6. Continuous round baler press belt according to one of Claims 1 to 5, **characterized in that** the abutment points (11, 13) of the respective inner and outer fabric web layers (6 and 8, respectively) of the respective rubber covering sheet (2 and 3, respectively) are covered by a covering strip (12, 14) made of open webbing.

7. Method for producing a continuous round baler press belt according to the preceding claims, **characterized by** the following method steps:
- at least two fabric web layers are cut to length in a way which is matched to the circumferential length of the endless round baler press belt which is to be produced,
- the fabric web layers are laid one on top of the other with circumferential offsetting of the abutment points (11, 13, 15),
- positioning of an inner and an outer rubber covering sheet (2, 3), and
- vulcanization of the constructed continuous belt blank.

## Revendications

1. Bande sans fin de pressage de ballots ronds, en caoutchouc ou en matériaux similaires au caoutchouc, dans laquelle est incorporée une âme en tissu de renfort qui présente au moins deux couches de tissu superposées,
l'âme (carcasse) étant constituée d'au moins deux couches distinctes (6, 7, 8) de bande de tissu superposées,
**caractérisée en ce que**
les deux extrémités de chaque couche de bande de tissu sont posées bout à bout et sans superposition et
**en ce que** les emplacements de jonction bout à bout (11, 13, 15) des différentes couches (6, 7 ou 8) de bande de tissu sont réparties à la périphérie de la bande de pressage.

2. Bande sans fin de pressage de ballots ronds selon la revendication 1, **caractérisée en ce que** les couches (6, 7, 8) de bande de tissu sont constituées de types de tissus différents.

3. Bande sans fin de pressage de ballots ronds selon la revendication 1, **caractérisée en ce que** les couches (6, 7, 8) de bande de tissu sont constituées de types de tissus qui présentent des propriétés mécaniques différentes.

4. Bande sans fin de pressage de ballots ronds selon la revendication 1, **caractérisée en ce que** les couches (6, 7, 8) de bande de tissu sont constituées de différents matériaux de tissu.

5. Bande sans fin de pressage de ballots ronds selon la revendication 1, **caractérisée en ce que** la carcasse est constituée de trois couches (6, 7, 8) de bande de tissu dont les emplacements de jonction bout à bout (11, 13, 15) sont réparties à un angle mutuel de 120° autour de la périphérie de la bande sans fin de pressage de ballots ronds.

6. Bande sans fin de pressage de ballots ronds selon l'une des revendications 1 à 5, **caractérisée en ce que** les emplacements de jonction bout à bout (11, 13) de la couche intérieure et de la couche extérieure (6 et 8) de bande de tissu sont recouverts du côté de chaque plaque (2 ou 3) de recouvrement en caoutchouc par un ruban de recouvrement (12, 14) en un treillis tissé ouvert.

7. Procédé de fabrication d'une bande sans fin de pressage de ballots ronds selon les revendications précédentes, **caractérisé par** les étapes suivantes :
découpe d'au moins deux couches de bande de tissu accordées à la longueur périphérique de la bande sans fin de pressage de ballots ronds à former,
superposition des couches de bandes de tissus avec un décalage mutuel des emplacements de jonction bout à bout (11, 13, 15) autour de la périphérie,
application d'une plaque intérieure et d'une plaque extérieure (2, 3) de recouvrement en caoutchouc et
vulcanisation de l'ébauche de bande sans fin ainsi formée.
